# EUROPÄISCHE PATENTSCHRIFT

(11) **EP 3 352 142 B1**
(45) Veröffentlichungstag und Bekanntmachung des Hinweises auf die Patenterteilung: **10.07.2024**
(21) Anmeldenummer: 18152545.2
(22) Anmeldetag: 19.01.2018
(51) Int. Cl.: G07C 9/00, H04L 9/32, G06F 21/31

(54) **SYSTEM UND VERFAHREN ZUM ENTRIEGELN EINES SCHLOSSES EINES SCHLOSS-SYSTEMS**
SYSTEM AND METHOD FOR UNLOCKING A LOCK OF A LOCK SYSTEM
SYSTÈME ET PROCÉDÉ DE DÉVERROUILLAGE D'UNE SERRURE D'UN SYSTÈME DE SERRURE

(30) Priorität: 20.01.2017 DE 102017000514
(43) Veröffentlichungstag der Anmeldung: 25.07.2018
(73) Patentinhaber: Gunnebo Deutschland GmbH, 85748 Garching (DE)
(72) Erfinder: Seifert, Stephan, 92353 Postbauer-Heng (DE)
(74) Vertreter: Samson & Partner Patentanwälte mbB

(56) Entgegenhaltungen:
- EP-A1- 1 650 716
- EP-A2- 1 205 885
- WO-A1-2015/124168
- DE-A1- 102004 056 987
- US-A1- 2016 036 814

## Beschreibung

### GEBIET DER ERFINDUNG

Die vorliegende Erfindung betrifft Schloss-Systeme, welche mit einem zeitlich beschränkt gültigen Code geöffnet werden können, sowie Verfahren zur Verwendung mit solchen Schloss-Systemen.

### HINTERGRUND DER ERFINDUNG

Zur Öffnung elektronischer Schlösser können zeitlich beschränkt gültige Codes verwenden werden, die auch als OTC (One Time Code) bezeichnet werden. Mit einem solchen OTC kann eine Person autorisiert werden, ein bestimmtes Schloss innerhalb eines vorbestimmten Zeitraumes zu öffnen.

Dies findet insbesondere bei elektronischen Schloss-Systemen Verwendung, bei denen das Schloss mittels einer von diesem entfernt angeordneten System-Steuerung verwaltet wird, welche u.a. prüft, ob eine Person (auch Benutzer genannt) autorisiert ist, das Schloss zu öffnen, und gegebenenfalls der Person selbst einen OTC bereitstellt, um das Schloss öffnen zu können.

Nachteilig kann hierbei sein, dass insbesondere Änderungen hinsichtlich von Personen, die zum Öffnen eines bestimmten Schlosses autorisiert sind oder werden sollen, nicht nur zentral an der System-Steuerung vorgenommen werden müssen, sondern auch an dem bestimmten Schloss selbst. Der damit verbundene Aufwand insbesondere im Fall von Änderungen an mehreren Schlössern kann erheblich sein.

Gemäß der US 2004/0 219 903 A1 wird die Autorisierung eines Benutzers zum Entriegeln eines Schlusses durch eine Zentrale durchgeführt, wobei ein Öffnungscode von der Zentrale über ein Telefon an das Schloss gesendet wird.

Die WO 00/76378 A2 offenbart, zum Entriegeln eines Schlosses die Autorisierung eines Benutzers von einer Zentrale anhand einer Benutzerkennung und eines Benutzercodes vorzunehmen. Der Benutzercode wird unmittelbar am Schloss eingegeben und an die Zentrale gesendet und dort geprüft.

Nach der EP 1 650 716 A1 wird zum Entriegeln eines Schlosses ein Schließcode zu einem Benutzer übertragen. Der Schließcode erhält einen Gültigkeitszeitraum, der vom Schloss geprüft wird. Der Gültigkeitszeitraum ist die Zeit, der der Schließcode am Schloss eingegeben werden kann.

Die EP 1 650 716 A1 offenbart, einem Benutzer, der ein Zugang zu einem Objekt gewährendes Schloss öffnen möchte, einen Code zuzusenden, der eine Kennung des Objekts und eine Berechtigungszeit und eine Berechtigtenkennung umfasst. Die Berechtigungszeit gibt einen Zeitraum an, während dem der Code zum Öffnen des Schlosses gültig ist. Die Berechtigtenkennung gibt einen zum Öffnen des Schlosses berechtigten Benutzer an. Der Benutzer gibt den erhaltenen Code in das Schloss ein, welches dann prüft, ob die Kennung des Objekts das Objekt angibt, zu dem das Schloss gehört, ob der Zeitpunkt der Codeeingabe in dem von der Berechtigungszeit angegeben Zeitraum liegt und ob die im Code enthaltene Berechtigtenkennung mit eine im Schloss gespeicherten Berechtigtenkennung übereinstimmt. Wenn dies der Fall ist, kann das Schloss geöffnet werden.

Die EP 1 205 885 A2 offenbart, von einem Schloss einen von einem Benutzer dort eingegebenen Code an ein Zugangskontrollsystem zu senden. Das Zugangskontrollsystem prüft anhand des Codes, ob der Benutzer zum Öffnen des Schlosses berechtigt ist. Ist dies der Fall, sendet das Zugangskontrollsystem eine Gültigkeitsantwort an das Schloss zurück, welche das Öffnen des Schlosses ermöglicht. Ferner ist es vorgesehen, dass das Schloss einen Code eines Benutzers nur während eines bestimmten Zeitraums oder nur für eine vorbestimmte Anzahl von Eingaben akzeptiert.

### AUFGABE

Der vorliegenden Erfindung liegt die Aufgabe zugrunde, Lösungen bereitzustellen, welche den Betrieb von Schloss-Systemen, bei denen OTCs zur Schlossöffnung/-entriegelung verwendet werden, einfacher und sicherer gestalten.

### KURZBESCHREIBUNG DER ERFINDUNG

Diese Aufgabe wird durch die Gegenstände gemäß den unabhängigen Ansprüchen gelöst. Die abhängigen Ansprüche beschreiben Varianten derselben.

### KURZBESCHREIBUNG DER ZEICHNUNGEN

Im Folgenden werden Ausführungsformen der vorliegenden Erfindung anhand der Zeichnungen beschrieben.
- Fig. 1: zeigt eine schematische Ansicht eines bespielhaften Schloss-Systems, bei dem ein OTC zur Schlossöffnung/-entriegelung verwendet wird;
- Fig. 2: veranschaulicht ein beispielhaftes Verfahren bei Verwendung des Schloss-Systems von Fig. 2;
- Fig. 3: zeigt eine schematische Ansicht eines bespielhaften Schloss-Systems gemäß der vorliegenden Erfindung;

- Fig. 4: veranschaulicht beispielhafte Verfahren bei Verwendung des Schloss-Systems von Fig. 3.

In den Zeichnungen haben wenigstens im Wesentlichen funktionsgleiche Elemente gleiche Bezugszeichen. Ferner gelten für verschiedene Ausführungsformen gemachten Ausführungen auch für alle anderen Ausführungsformen, sofern nichts anderes gesagt wird. Ferner wird im Folgenden auf alle Zeichnungen insgesamt Bezug genommen, sofern nicht anders angegeben oder auf bestimmte Zeichnungen verwiesen wird.

### BESCHREIBUNG BEVORZUGTER AUSFÜHRUNGSFORMEN

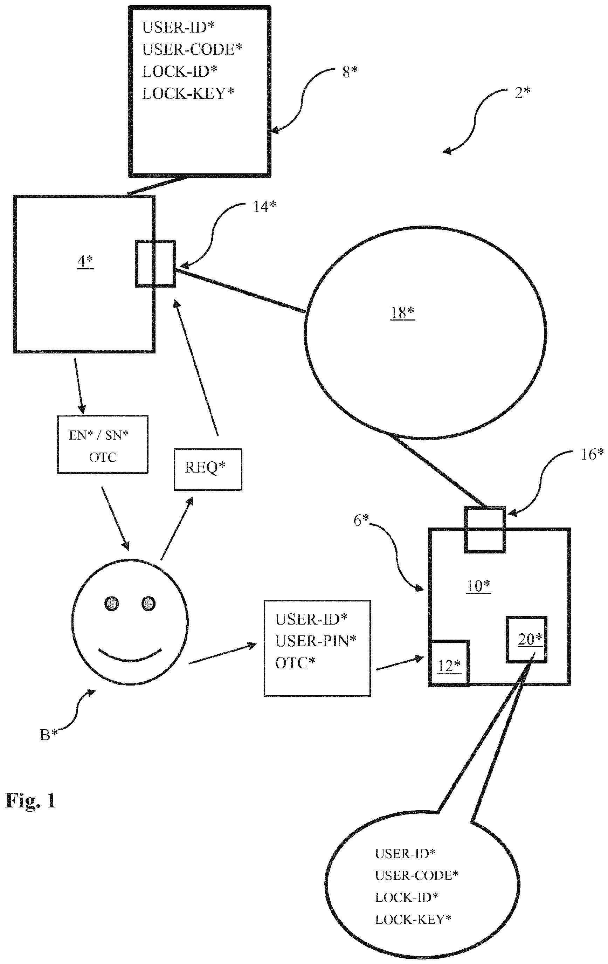

Im Folgenden wird zunächst auf bekannte Schloss-Systeme, bei denen OTCs zur Schlossöffnung/-entriegelung verwendet werden, Bezug genommen. Ein solches System ist in Fig. 1 veranschaulicht.

Das Schloss-System 2* von Fig. 1 umfasst eine zentrale System-Steuerung 4* und entfernt von dieser ein Schloss 6*.

Ferner sind eine Schloss-Steuerung 10* und eine Benutzer-Schnittstelle 12* vorhanden.

Ferner weist die System-Steuerung 4* eine System-Kommunikationsschnittstelle 14* auf. Die System-Kommunikationsschnittstelle 14* kann beispielsweise verwendet werden, um, wie weiter unten erläutert, Information von einem Benutzer zu erhalten und zu diesem zu übertragen.

Auch das Schloss 6* weist eine Kommunikationsschnittstelle, im Folgenden Schloss-Kommunikationsschnittstelle 16*, auf. Die Schloss-Kommunikationsschnittstelle 16* kann dazu verwendet werden, wie weiter unten erläutert, eine Anfrage eines Benutzers B*, das Schloss 6* öffnen zu dürfen, an die System-Steuerung 4* zu übertragen. Hierfür ist ein Netzwerk 18* vorgesehen.

Es ist aber nicht möglich, sensible sicherheitsrelevante Daten, insbesondere die im Folgenden genannten Kennungen, Codes und Schlüssel, von der System-Steuerung 4* zum Schloss 6* und/oder in umgekehrter Richtung zu übertragen.

Die System-Steuerung 4* kennt für jeden Benutzer, der zum Öffnen/Entriegeln des Schlosses autorisiert ist, jeweils eine den betreffenden Benutzer eindeutig identifizierende Benutzer-Kennung USER-ID*, jeweils einen dem betreffenden Benutzer zugeordneten Benutzer-Code USER-PIN*, eine das Schloss eindeutig identifizierende Schloss-Kennung LOCK-ID* sowie einen dem Schloss zugeordneten Schloss-Schlüssel LOCK-KEY*. Diese Informationen sind räumlich getrennt bzw. entfernt von dem Schloss 6* gespeichert, beispielsweise in der Datenbank 8*, auf die die System-Steuerung 4* zugreifen kann.

Der Schloss-Schlüssel LOCK-KEY* ist ein Verschlüsselungsschlüssel, um Daten zu verschlüsseln.

Auch das Schloss 6* kennt für jeden Benutzer, der zum Öffnen/Entriegeln des Schlosses autorisiert ist, die jeweilige Benutzer-Kennung USER-ID* und den jeweiligen Benutzer-Code U-SER-PIN*. Ferner kennt das Schloss 6* seine eigene Schloss-Kennung LOCK-ID* und seinen eigenen Schloss-Schlüssel LOCK-KEY*. Diese Informationen können in einem ins Schloss 6* integrierten Speicher 20* gespeichert sein.

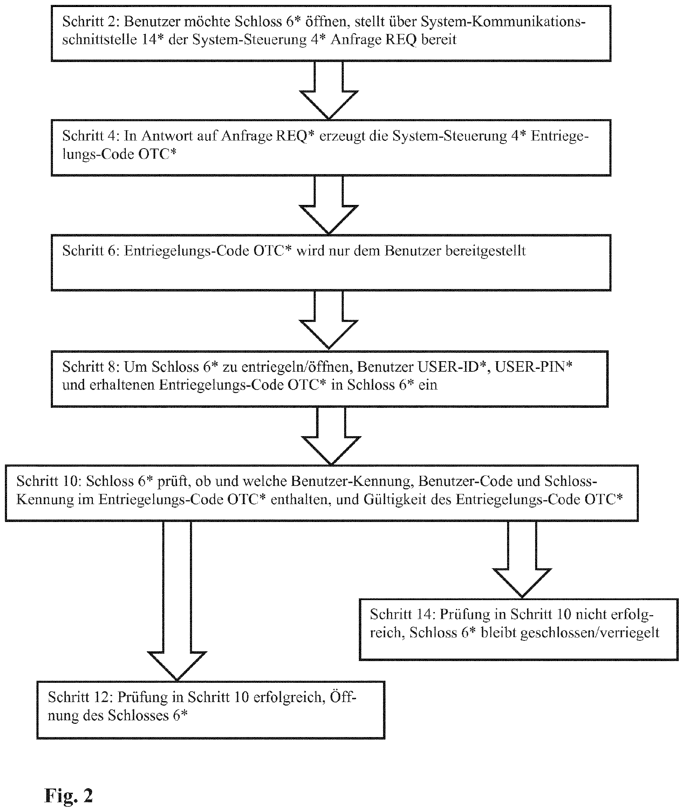

Wenn nun ein Benutzer das Schloss 6* öffnen möchte, erhält die System-Steuerung 4* über die System-Kommunikationsschnittstelle 14* eine entsprechende Anfrage REQ des Benutzers (s. Schritt 2 von Fig. 2).

In Antwort auf den Erhalt der Anfrage REQ* erzeugt die System-Steuerung 4* einen zeitlich begrenzt gültigen Entriegelungs-Code OTC* (s. Schritt 4 von Fig. 2).

Der Entriegelungs-Code OTC* ist nur für den anfragenden Benutzer und nur für dieses Schloss 6* sowie nur für einen vorbestimmten Zeitraum gültig.

Der Entriegelungs-Code OTC* wird nur dem Benutzer, aber nicht dem Schloss 6* direkt bereitgestellt (s. Schritt 6 von Fig. 2).

Der Entriegelungs-Code OTC* kann dem Benutzer beispielsweise mittels einer an den Benutzer direkt adressierten elektronischen Nachricht EN (z.B. per SMS, MMS, E-Mail, Sprachnachricht, Videonachricht, etc.) oder schriftlich SN (z.B. per Brief, Fax) übermittelt werden.

Um das Schloss 6* zu entriegeln bzw. zu öffnen, gibt der Benutzer seine Benutzer-Kennung USER-ID*, seinen Benutzer-Code USER-PIN* und den erhaltenen Entriegelungs-Code OTC* über die Benutzer-Schnittstelle 12* in das Schloss 6* ein (s. Schritt 8 von Fig. 2).

Dann prüft das Schloss 6*, ob der Entriegelungs-Code OTC* eine Benutzer-Kennung umfasst, von der das Schloss 6* weiß, dass sie einem zum Öffnen des Schlosses autorisierten Benutzer zugeordnet ist; mit anderen Worten, ob die eingegebene Benutzer-Kennung USER-ID* für das Schloss 6* gültig ist. Ferner prüft das Schloss 6*, ob der Entriegelungs-Code OTC* einen Benutzer-Code umfasst, der dem Schloss 6* bekannt ist bzw. die Benutzer-Kennung ist, die dem anfragenden Benutzer, also dem Benutzer, der gerade das Schloss 6* öffnen will, zugeordnet ist; mit anderen Worten, ob der eingegebene Benutzer-Code USER-PIN* zur Benutzer-Kennung USER-ID* passt bzw. gültig ist. Des Weiteren prüft das Schloss 6*, ob der Entriegelungs-Code OTC* seine eigene Schloss-Kennung umfasst. Auch prüft das Schloss, ob der Entriegelungs-Code OTC* noch gültig ist; sprich, ob der vorgegebene Zeitraum, in dem der Entschlüsselung-Code OTC* gültig ist, vorliegt bzw. noch nicht abgelaufen ist. (s. Schritt 10 von Fig. 2)

Wenn dies alles der Fall ist, öffnet sich das Schloss 6* selbsttätig oder kann vom Benutzer geöffnet werden (s. Schritt 12 von Fig. 2).

Wenn nur eine der Prüfungen nicht positiv ausfällt, kann das Schloss 6* nicht geöffnet werden und bleibt verriegelt bzw. verschlossen (s. Schritt 14 von Fig. 2).

Nachteilig hierbei ist, dass insbesondere Änderungen hinsichtlich von Personen, die zum Öffnen eines bestimmten Schlosses autorisiert sind oder werden sollen, nicht nur zentral an der System-Steuerung vorgenommen werden müssen, sondern auch an dem bestimmten Schloss selbst. Der damit verbundene Aufwand insbesondere im Fall von Änderungen an mehreren Schlössern kann erheblich sein.

Um diese und weitere Nachteile bekannter Systeme zu überwinden, stellt die vorliegende Erfindung und die im Folgenden beschriebenen Lösungen vor.

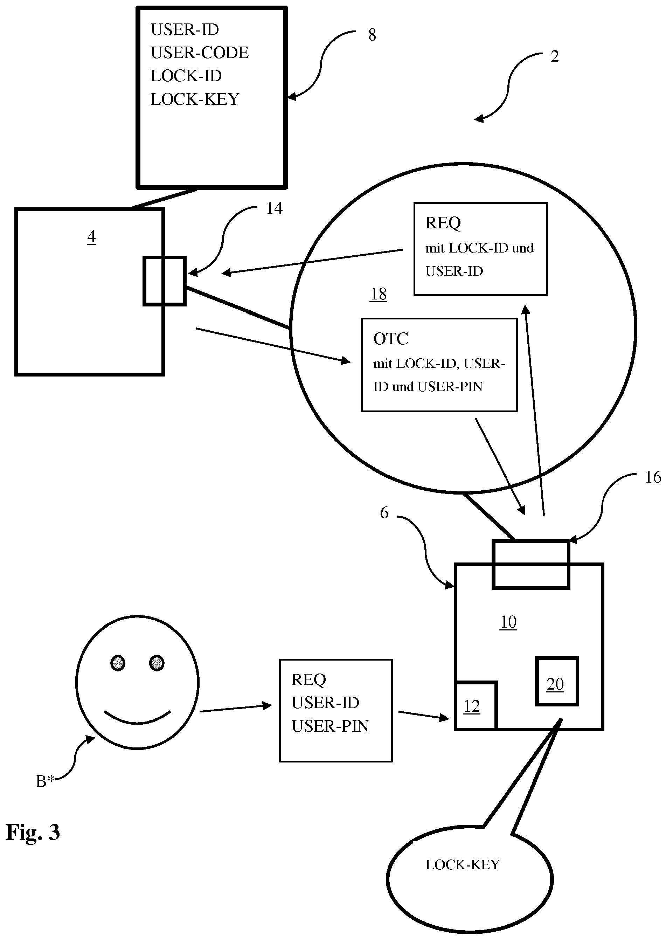

Das Schloss-System 2 von Fig. 3 umfasst einerseits eine zentrale System-Steuerung 4 und entfernt von dieser ein Schloss 6.

Die System-Steuerung 4 kann beispielsweise einen Rechner, Server oder dergleichen und eine Datenbank 8 umfassen.

Das Schloss 6 weist üblicherweise Hardwarekomponenten auf, die die mechanische Ver- und Entriegelungsfunktionen bereitstellen, oder ist solchen, soweit diese nicht baueinheitlich integriert sind, zugeordnet. Ferner sind eine Schloss-Steuerung 10 und eine Benutzer-Schnittstelle 12 vorhanden.

Ferner weist die System-Steuerung 4 eine System-Kommunikationsschnittstelle 14 auf. Die System-Kommunikationsschnittstelle 14 wird erfindungsgemäß verwendet, um, wie weiter unten erläutert, Information von einem Benutzer B zu erhalten und zu diesem zu übertragen.

Auch das Schloss 6 weist eine Kommunikationsschnittstelle, im Folgenden Schloss-Kommunikationsschnittstelle 16, auf. Die Schloss-Kommunikationsschnittstelle 16 wird erfindungsgemäß dazu verwendet, wie weiter unten erläutert, eine Anfrage eines Benutzers, das Schloss 6 öffnen zu dürfen, an die System-Steuerung 4 zu übertragen.

Im Gegensatz zu Fig. 1 und Fig. 2 ist es hier vorgesehen, dass bestimmte Daten, insbesondere bestimmte der im Folgenden genannten Kennungen, Codes und Schlüssel, von der System-Steuerung 4 über die System-Kommunikationsschnittstelle 14 direkt an das Schloss 6 und/oder vom Schloss 6 über die Schloss-Kommunikationsschnittstelle 16 an die System-Steuerung 4 übertragen werden.

Zur Datenübertragung zwischen der System-Steuerung 4 und dem Schloss 6 ist ein Netzwerk 18 vorgesehen, welches beispielsweise zur drahtgebundenen und/oder drahtlosen Datenübertragung ausgelegt sein kann und wenigstens ein LAN, W-LAN, das Internet, wenigstens ein Mobilfunknetz etc. umfassen kann.

Die System-Steuerung 4 kennt für jeden Benutzer, der zum Öffnen/Entriegeln des Schlosses autorisiert ist, jeweils eine den betreffenden Benutzer eindeutig identifizierende Benutzer-Kennung USER-ID, jeweils einen dem betreffenden Benutzer zugeordneten Benutzer-Code USER-PIN, eine das Schloss eindeutig identifizierende Schloss-Kennung LOCK-ID sowie einen dem Schloss zugeordneten Schloss-Schlüssel LOCK-KEY.

Diese Informationen werden räumlich getrennt bzw. entfernt von dem Schloss 6 gespeichert, nämlich in der Datenbank 8, auf die die System-Steuerung 4 zugreifen kann.

Eine Benutzer-Kennung USER-ID kann beispielsweise eine Zahlen-, Buchstaben- und/oder Zeichenkombination umfassen. Ergänzend oder alternativ kann eine Benutzer-Kennung U-SER-ID biometrische Information/Daten des jeweiligen Benutzers umfassen, beispielsweise einen oder mehrere Fingerabdrücke des Benutzers angebende Information, ein Abbild einer Iris des Benutzers angebende Information, Sprache (z.B. eine Wortfolge) und/oder Stimm-/Sprachcharakteristik des Benutzers angebende Information, wenigstens einen Teil des Gesichts (oder anderer Körperteile) des Benutzers angebende Information, eine vom Benutzer ausgeführte Bewegung und/oder Geste angebende Information, sowie jegliche Kombination derartiger Informationen.

Ein Benutzer-Code USER-PIN kann beispielsweise, vergleichbar zur einer PIN, eine Zahlen-, Buchstaben- und/oder Zeichenkombination umfassen. Ergänzend oder alternativ kann ein Benutzer-Code USER-PIN biometrische Information/Daten des jeweiligen Benutzers umfassen, beispielsweise einen oder mehrere Fingerabdrücke des Benutzers angebende Information, eine Abbild einer Iris des Benutzers angebende Information, Sprache (z.B. eine Wortfolge) und/oder Stimm-/Sprachcharakteristik des Benutzers angebende Information, wenigstens einen Teil des Gesichts (oder anderer Körperteile) des Benutzers angebende Information, eine vom Benutzer ausgeführte Bewegung und/oder Geste angebende Information, sowie jegliche Kombination derartiger Informationen.

Die Schloss-Kennung LOCK-ID, auch als Schloss-ID bezeichnet, kann ebenfalls eine Zahlen-, Buchstaben- und/oder Zeichenkombination umfassen.

Der Schloss-Schlüssel LOCK-KEY ist ein Verschlüsselungsschlüssel, um Daten zu verschlüsseln.

Im Gegensatz dazu kennt das Schloss 6 keine Benutzer-Kennungen und keine Benutzer-Codes für Benutzer, die zum Öffnen/Entriegeln des Schlosses autorisiert sind.

Allerdings kennt das Schloss 6 seine eigene Schloss-Kennung LOCK-ID und seinen eigenen Schloss-Schlüssel LOCK-KEY. Diese Informationen können in einem ins Schloss 6 integrierten Speicher 20 gespeichert sein.

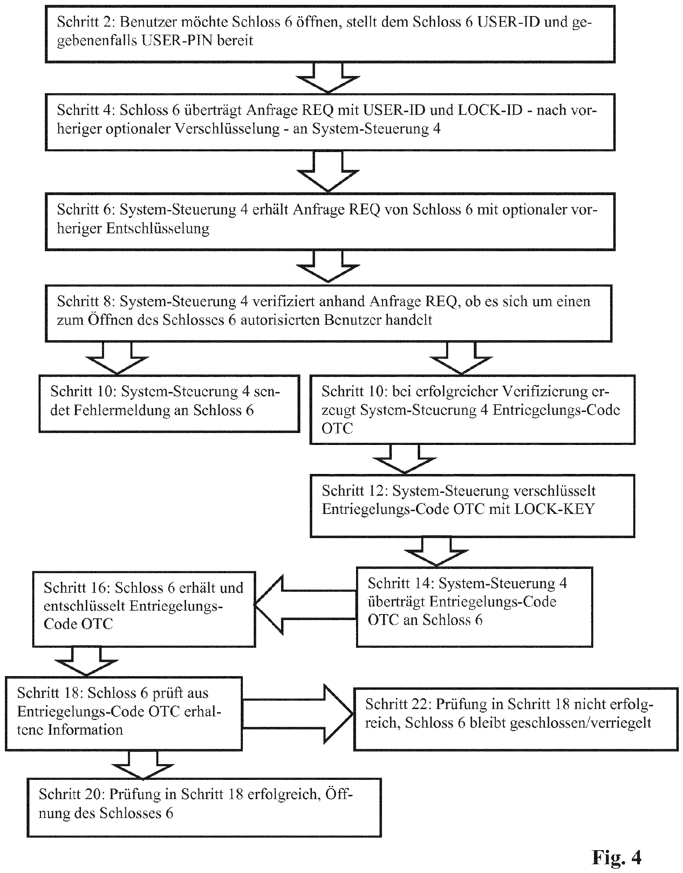

Wenn nun ein Benutzer das Schloss 6 öffnen möchte, gibt der Benutzer seine Benutzer-Kennung USER-ID und seinen Benutzer-Code USER-PIN mittels der Benutzer-Schnittstelle 12 ein (s. Schritt 2 von Fig. 4). Die Eingabe des Benutzer-Codes USER-PIN kann, wie weiter unten erläutert, ergänzend oder alternativ auch später erfolgen.

Abhängig davon, welche Form die Benutzer-Kennung USER-ID und/oder der Benutzer-Code USER-PIN haben, kann die Benutzer-Schnittstelle 12 wenigstens eine der folgenden Komponenten umfassen:
- Tastatur
- Sensor zur Fingerabdruckerfassung
- Sensor zur Iriserfassung ("Iris-Scanner")
- Mikrophon zur Stimmerfassung
- Kamera zur Erfassung von sichtbaren Körperbereichen
- Kamera zur Erfassung von Bewegungen und/oder Gesten

Gemäß der Erfindung überträgt das Schloss 6 die erhaltene Benutzer-Kennung USER-ID und die eigene Schloss-Kennung LOCK-ID sowie gegebenenfalls weitere Information über die Schloss-Kommunikationsschnittstelle 16, das Netzwerk 18 und die System-Kommunikationsschnittstelle 14 an die System-Steuerung 4 (s. Schritt 4 von Fig. 4). Beispielsweise kann die Übertragung zwischen der Schloss-Kommunikationsschnittstelle 16 und der System-Kommunikationsschnittstelle 14 über das Netzwerk 18 verschlüsselt erfolgen (z.B. AES128 Verschlüsselung), wobei in solchen Fällen empfängerseitig eine entsprechende Entschlüsselung vor weiteren empfängerseitigen Schritten nötig sein kann.

Bei einer Variante verschlüsselt die Schloss-Steuerung 10 die erhaltene Benutzer-Kennung U-SER-ID und die eigene Schloss-Kennung LOCK-ID sowie gegebenenfalls weitere Information unter Verwendung ihres Schloss-Schlüssels LOCK-KEY (s. optionaler Teil von Schritt 4 von Fig. 4) und überträgt das Verschlüsselungsergebnis über die Schloss-Kommunikationsschnittstelle 16, das Netzwerk 18 und die System-Kommunikationsschnittstelle 14 an die System-Steuerung 4 (s. Schritt 4 von Fig. 4).

Die von der System-Steuerung 4 erhaltenen Daten werden von dieser als Anfrage REQ verstanden, dass jemand das Schloss 6 öffnen möchte, (s. Schritt 6 von Fig. 4).

Aus der erhaltenen Anfrage REQ ermittelt die System-Steuerung 4 die Benutzer-Kennung U-SER-ID und die Schloss-Kennung LOCK-ID.

Hierfür ist es erforderlich, wenn die Daten der Anfrage REQ seitens des Schlosses 6 vor der Übertragung mittels des Schloss-Schlüssels LOCK-KEY verschlüsselt wurden, dass die System-Steuerung 4 die Anfrage REQ entschlüsselt (s. optionaler Teil von Schritt 6 von Fig. 4).

Dafür verwendet System-Steuerung 4 den aus der Datenbank 8 verfügbaren Schloss-Schlüssel LOCK-KEY, um ein Entschlüsselungsergebnis zu erhalten, welches die Benutzer-Kennung USER-ID und die Schloss-Kennung LOCK-ID umfasst (bzw. umfassen sollte).

Gegebenenfalls enthält die erhaltene Anfrage REQ (Variante ohne Verschlüsselung mit Schloss-Schlüssels LOCK-KEY vor Übertragung) oder das Entschlüsselungsergebnis (Variante mit Verschlüsselung mit Schloss-Schlüssels LOCK-KEY vor Übertragung) auch Information darüber, wann die Schloss-Steuerung 10 die Verschlüsselung durchgeführt hat und/oder wann der Benutzer seine Benutzer-Kennung USER-ID und/oder seinen Benutzer-Code USER-PIN eingegeben hat. Anhand solcher Information kann die System-Steuerung 4 erkennen, ob z.B. der Zeitraum zwischen Verschlüsselung seitens der Schloss-Steuerung 10 und/oder Eingabe der Benutzer-Kennung USER-ID und/oder der Benutzer-Code USER-CODE und Erhalt der Anfrage REQ darauf hindeuten könnte, dass es sich um einen Versuch handelt, das Schloss unberechtigterweise öffnen zu wollen. Wenn ein solcher Zeitraum zu groß ist, könnte die erhaltene Anfrage REQ z.B. eine Anfrage sein, die schon früher von einem berechtigten Benutzer ausgelöst wurde und nun von einer nicht berechtigten Person erneut verwendet wird. In solchen Fällen kann es vorgesehen sein, dass die System-Steuerung nicht, wie im Folgenden erläutert einen zeitlich begrenzt gültigen Entriegelungs-Code OTC erzeugt, auch wenn eine Prüfung der Anfrage REQ positiv ausfällt, und/oder keine weitere Prüfung der Anfrage REQ vornimmt und die Anfrage REQ nicht weiter bearbeitet bzw. verwirft.

Die System-Steuerung 4 prüft, ob die Benutzer-Kennung aus der Anfrage REQ eine Benutzer-Kennung ist, von der die System-Steuerung 4 (z.B. weil sie in der Datenbank 8 vorliegt) weiß, dass sie einem zum Öffnen des Schlosses 6 autorisierten Benutzer zugeordnet ist; mit anderen Worten, ob die eingegebene Benutzer-Kennung USER-ID für das Schloss 6 gültig und diesem zugeordnet ist.

Anhand der Schloss-Kennung LOCK-ID aus der Anfrage REQ erkennt die System-Steuerung 4, dass es sich um das Schloss 6 handelt.

Ferner prüft die System-Steuerung 4, wenn die Benutzer-Kennung aus der Anfrage REQ eine gültige Benutzer-Kennung ist, ob es dieser zugeordnet eine der System-Steuerung 4 bekannte in der Datenbank 8 vorliegende Benutzer-Kennung gibt und greift auf diese zu.

Anhand der Anfrage REQ verifiziert die System-Steuerung 4, ob es sich um einen zum Öffnen des Schlosses 6 autorisierten Benutzer handelt (s. Schritt 8 von Fig. 4). Wenn die Anfrage REQ keine gültige Benutzer-Kennung und/oder keine gültige Schloss-Kennung umfasst und/oder es keine Zuordnung der Benutzer-Kennung aus der Anfrage REQ und der Schloss-Kennung LOCK-ID aus der Anfrage REQ gibt und/oder es keine Zuordnung der Benutzer-Kennung aus der Anfrage REQ und einer der System-Steuerung 4 bekannten Benutzer-Kennung gibt, wird die Verifizierung als fehlgeschlagen betrachtet.

Ferner kann bei der Verifizierung geprüft werden, ob die Anfrage REQ in einem vorbestimmten Nutzungszeitraum (z.B. bestimmte Tageszeit; bestimmter Tag, Monat) eingegangen ist, im dem der Benutzer berechtigt ist, das Schloss 6 zu öffnen. Wenn dies nicht der Fall ist, kann die Verifizierung als fehlgeschlagen betrachtet werden.

Im Fall einer fehlgeschlagenen Verifizierung wird die Anfrage REQ verworfen und/oder nicht weiterbearbeitet, mit dem Ergebnis, dass das Schloss 6 nicht geöffnet werden kann. Eine fehlgeschlagene Verifizierung kann die System-Steuerung 4 dem Schloss 6 beispielsweise mittels einer Fehlermeldung mitteilen (s. Schritt 10 von Fig. 4). Eine solche Fehlermeldung kann z.B. verwendet werden, um den Benutzer darüber zu informieren und/oder das Schloss 6 für einen vorbestimmten Zeitraum generell oder für diesen Benutzer zu sperren (z.B. keine Eingabe von Benutzer-Kennung und/oder Benutzer-Code für einen bestimmten Zeitraum möglich; bei Eingabe der Benutzer-Kennung und/oder des Benutzer-Codes dieses Benutzers werden diese nicht verwendet oder verworfen).

Wenn die Anfrage REQ eine gültige Benutzer-Kennung und eine gültige Schloss-Kennung umfasst und es eine Zuordnung der Benutzer-Kennung aus der Anfrage REQ und der Schloss-Kennung LOCK-ID aus der gibt und es Zuordnung der Benutzer-Kennung aus der Anfrage REQ und einer der System-Steuerung 4 bekannten Benutzer-Kennung gibt, sowie, wenn gegebenenfalls weitere Verifizierungskriterien (z.B. vorbestimmter Nutzungszeitraum, etc.) erfüllt sind, wird die Verifizierung als erfolgreich betrachtet.

Im Fall einer erfolgreichen Verifizierung erzeugt die System-Steuerung 4 einen zeitlich begrenzt gültigen Entriegelungs-Code OTC (s. Schritt 10 von Fig. 4).

Der Entriegelungs-Code OTC ist nur für den anfragenden Benutzer und nur für dieses Schloss 6 sowie nur für einen vorbestimmten Zeitraum gültig (im Folgenden Gültigkeitszeitraum).

Der Entriegelungs-Code OCT umfasst:
- gegebenenfalls die aus der Anfrage REQ erhaltene Benutzer-Kennung USER-ID des anfragenden Benutzers,
- erfindungsgemäß den Benutzer-Code USER-PIN des anfragenden Benutzers,
- erfindungsgemäß die aus der Anfrage REQ erhaltenen, dem zu öffnenden Schloss zugeordnete Schloss-Kennung LOCK-ID,
- erfindungsgemäß eine Angabe über den Gültigkeitszeitraum,
- gegebenenfalls Einschränkungen/Vorgaben hinsichtlich der Modalitäten, die zum Öffnen des Schlosses zu erfüllen sind, erfüllt sind (näheres hierzu weiter unten).

Als Benutzer-Code USER-PIN des anfragenden Benutzers, der ja nicht mit der Anfrage REQ übertragen wird, verwendet die System-Steuerung 4 den ihr bekannten Benutzer-Code USER-PIN, der in der Datenbank 8 vorliegt.

Ferner kann der Entriegelungs-Code OTC weitere Information enthalten, wie z.B. Einschränkungen/Vorgaben hinsichtlich der Modalitäten, die zum Öffnen des Schlosses zu erfüllen sind. Beispielsweise kann der Entriegelungs-Code OTC Information umfassen, dass wenigstens zwei Benutzer am Schloss präsent sein und jeweils einen Entriegelungs-Code OTC haben müssen, damit das Schloss 6 geöffnet werden kann (auch als Parallel-Modus oder Vier-Augen-Prinzip genannt). Näheres hierzu wird weiter unten beschrieben.

Der Entriegelungs-Code OTC wird erfindungsgemäß mittels des Schloss-Schlüssels LOCK-KEY des zu öffnenden Schlosses 6 verschlüsselt (s. Schritt 12 von Fig. 4).

Der verschlüsselte Entriegelungs-Code OTC wird von der System-Steuerung 4 über die System-Kommunikationsschnittstelle 14, das Netzwerk 18 und die Schloss-Kommunikationsschnittstelle 14 an die Schloss-Steuerung 4 übertragen (s. Schritt 14 von Fig. 4). Die Übertragung zwischen der System-Kommunikationsschnittstelle 14 und der Schloss-Kommunikationsschnittstelle 16 über das Netzwerk 18 erfolgt also verschlüsselt (z.B.

AES128 Verschlüsselung), wobei empfängerseitig eine entsprechende Entschlüsselung vor weiteren empfängerseitigen Schritten nötig ist.

In Antwort auf Erhalt des verschlüsselten Entriegelungs-Codes OTC entschlüsselt die Schloss-Steuerung 10 erfindungsgemäß den verschlüsselten Entriegelung-Codes OTC mittels des Schloss-Schlüssels LOCK-KEY und erhält den die vom Entriegelungscode OTC umfassten Benutzer-Code USER-PIN des anfragenden Benutzers und die vom Entriegelungs-code OTC umfasste Schloss-Kennung LOCK-ID sowie die vom Entriegelungscode OTC umfasste Angabe über den Gültigkeitszeitraum (s. Schritt 16 von Fig. 4).

Gegebenenfalls erhält die Schloss-Steuerung 10 auch im Entriegelungs-Code OTC enthaltene weitere Information, wie z.B. die Benutzer-Kennung USER-ID und Einschränkungen/Vorgaben hinsichtlich der Modalitäten, die zum Öffnen des Schlosses zu erfüllen sind (z.B. bezüglich Parallel-Modus oder Vier-Augen-Prinzip).

Die Schloss-Steuerung 10 prüft, ob die aus dem Entriegelungs-Code OTC erhaltene Schloss-Kennung LOCK-ID die eigene Schloss-Kennung LOCK-ID ist (s. Schritt 18 von Fig. 4).

Ferner prüft die Schloss-Steuerung 10, ob die aus dem Entriegelungs-Code OTC erhaltene Angabe über den Gültigkeitszeitraum angibt, dass Entriegelungs-Code OTC noch gültig bzw. noch nicht abgelaufen ist (s. Schritt 18 von Fig. 4).

Des Weiteren prüft die Schloss-Steuerung 10, ob der aus dem Entriegelungs-Code OTC erhaltene Benutzer-Code USER-PIN der des anfragenden Benutzers ist. Hierzu verwendet die

Schloss-Steuerung 10 den vom Benutzer bereits über die Benutzer-Schnittstelle 12 eingegebenen Benutzer-Code USER-PIN (s.o. Schritt 2 von Fig. 4) oder fordert den Benutzer auf, dies nun zu tun (s. Schritt 18 von Fig. 4).

Die hier beschriebene Reihenfolge, die aus dem Entriegelungs-Code OTC erhaltenen Informationen zu prüfen, ist nur eine Variante, die z.B. den Vorteil hat, dass der Benutzer seinen Benutzer-Code USER-PIN gegebenenfalls erst eingegeben muss, wenn alle Prüfungen zuvor erfolgreich waren. Allerdings können die aus dem Entriegelungs-Code OTC erhaltenen Informationen in beliebiger Reihenfolge geprüft werden, solange alle geprüft werden.

Die Prüfungen werden als erfolgreich betrachtet, wenn sie ergeben, dass
- die aus dem Entriegelungs-Code OTC erhaltene Schloss-Kennung LOCK-ID die eigene Schloss-Kennung LOCK-ID ist,
- die aus dem Entriegelungs-Code OTC erhaltene Angabe über den Gültigkeitszeitraum angibt, dass Entriegelungs-Code OTC noch gültig bzw. noch nicht abgelaufen ist,
- der aus dem Entriegelungs-Code OTC erhaltene Benutzer-Code USER-PIN der vom anfragenden Benutzers bereitgestellte Benutzer-Code USER-PIN ist,
- gegebenenfalls durch aus dem Entriegelungs-Code OTC erhaltene Einschränkungen/Vorgaben hinsichtlich der Modalitäten, die zum Öffnen des Schlosses zu erfüllen sind, erfüllt sind (näheres hierzu weiter unten).

Falls der Entriegelungs-Code auch die Benutzer-Kennung enthält, wird auch geprüft, ob diese der vom Benutzer am Schloss 6 eingegebenen Benutzer-Kennung entspricht.

Wenn dies alles der Fall ist, öffnet sich das Schloss 6 selbsttätig oder kann vom Benutzer geöffnet werden (s. Schritt 20 von Fig. 2).

Wenn nur eine der Prüfungen nicht positiv ausfällt, kann das Schloss 6 nicht geöffnet werden und bleibt verriegelt bzw. verschlossen (s. Schritt 22 von Fig. 2).

Wie schon erwähnt, kann der Entriegelungs-Code OTC Einschränkungen/Vorgaben hinsichtlich der Modalitäten, die zum Öffnen des Schlosses zu erfüllen sind, enthalten. So kann der Entriegelungs-Code OTC beispielsweise vorgegeben, dass wenigstens zwei Benutzer nötig sind, um das Schloss zu öffnen. Dies kann z.B. wie folgt ablaufen.

Die wenigstens zwei Benutzer senden vom selben Schloss 6 jeweils eine Anfrage REQ an die System-Steuerung 4, dass sie das Schloss 6 öffnen wollen. Die System-Steuerung 4 erzeugt für jeden Benutzer einen eigenen Entriegelungs-Code OTC, der jeweils angibt, dass zum Öffnen des Schlosses 6 neben dem Benutzer, dem der entsprechende Entriegelungs-Code OTC zugeordnet ist, auch der bzw. die weiteren Benutzer nötig sind.

Wenn das Schloss 6 die wenigstens zwei Entriegelungs-Codes OTC erhalten hat, werden diese jeweils wie oben beschrieben geprüft. Wenn die Prüfungen beider Entriegelungs-Codes OTC erfolgreich sind, d.h. jeder der wenigstens zwei Benutzer zum Öffnen autorisiert wurde, öffnet sich das Schloss 6 selbsttätig oder kann einem Benutzer manuell geöffnet werden. Wenn nur eine der Prüfungen bei einem der Entriegelungs-Codes OTC nicht positiv ausfällt, kann das Schloss 6 nicht geöffnet werden und bleibt verriegelt bzw. verschlossen.

Bei den Varianten, bei denen der Entriegelungs-Code OTC Einschränkungen/Vorgaben hinsichtlich der Modalitäten die zum Öffnen des Schlosses zu erfüllen sind, enthalten, kann man zwischen dem sogenannten Vier-Augen-Prinzip und dem sogenannte Parallel-Modus unterschieden werden.

Das Vier-Augen-Prinzip kann bei Schlössern verwendet werden, die eine Schließmechanik haben, die in einem Vorgang betätigt/geöffnet werden kann; ein Beispiel hierfür sind Einschloss-Systeme. Wenn zur Öffnung solcher Schlösser wenigstens zwei Benutzer erforderlich sind, werden deren Entriegelungs-Codes OTC geprüft und bei erfolgreicher Prüfung das Schloss geöffnet.

Der Parallel-Modus kann bei Schlössern verwendet werden, die eine Schließmechanik haben, die wenigstens zwei Vorgänge zur Öffnung benötigt; ein Beispiel hierfür sind Zwei- oder Mehrschloss-Systeme. Wenn zur Öffnung solcher Schlösser wenigstens zwei Benutzer erforderlich sind, werden deren Entriegelungs-Codes OTC geprüft und bei erfolgreicher Prüfung werden die wenigstens zwei Vorgänge, die Schließmechanik zu öffnen, durchgeführt (z.B. nacheinander).

Ferner sind erfindungsgemäß Beispiele vorgesehen, bei denen der Entriegelungs-Code OTC nur folgendes umfasst:
- die aus der Anfrage REQ erhaltene Benutzer-Kennung USER-ID des anfragenden Benutzers,
- die aus der Anfrage REQ erhaltene, zu öffnenden Schloss zugeordnete Schloss-Kennung LOCK-ID,
- eine Angabe über den Gültigkeitszeitraum,
- (optional) weitere Information, wie z.B. Einschränkungen/Vorgaben hinsichtlich der Modalitäten, die zum Öffnen des Schlosses zu erfüllen sind.

Bei solchen Beispielen wird der Entriegelungs-Code OTC nicht nur mittels Schloss-Schlüssels LOCK-KEY des zu öffnenden Schlosses 6 verschlüsselt, sondern auch mittels des der System-Steuerung 4 bekannten Benutzer-Codes USER-PIN (z.B. aus der Datenbank 8).

Bei der Entschlüsselung durch die Schloss-Steuerung 10 wird entsprechend ebenfalls der Schloss-Schlüssel LOCK-KEY und der vom Benutzer bereitgestellte Benutzer-Code USER-PIN verwendet.

Ferner gibt es Beispiele, welche nicht unter die vorliegende Erfindung fallen und bei denen der Entriegelungs-Code OCT nur folgendes umfasst:
- die aus der Anfrage REQ erhaltene, zu öffnenden Schloss zugeordnete Schloss-Kennung LOCK-ID,
- eine Angabe über den Gültigkeitszeitraum,
- (optional) weitere Information, wie z.B. Einschränkungen/Vorgaben hinsichtlich der Modalitäten, die zum Öffnen des Schlosses zu erfüllen sind.

Bei solchen Beispielen wird der Entriegelungs-Code OTC nicht nur mittels Schloss-Schlüssels LOCK-KEY des zu öffnenden Schlosses 6 verschlüsselt, sondern auch mittels des der System-Steuerung 4 bekannten Benutzer-Codes USER-PIN (z.B. aus der Datenbank 8) und die aus der Anfrage REQ erhaltene Benutzer-Kennung USER-ID des anfragenden Benutzers. Bei der Entschlüsselung durch die Schloss-Steuerung 10 wird entsprechend ebenfalls der Schloss-Schlüssel LOCK-KEY und der vom Benutzer bereitgestellte Benutzer-Code USER-PIN sowie die vom Benutzer bereitgestellte Benutzer-Kennung USER-ID verwendet.

Ein Entriegelungs-Code OTC kann während seines Gültigkeitszeitraumes nur einmal gültig sein und nur einmal zum Öffnen des Schlosses verwendet werden.

Ein Entriegelungs-Code OTC kann während seines Gültigkeitszeitraumes wenigstens zweimal (z.B. viermal) gültig sein und nur entsprechend oft zum Öffnen des Schlosses verwendet werden, wenn z.B. das Schloss aufgrund von Vorgaben/Vorschriften zwischenzeitlich zu schließen ist oder das Schloss zwischenzeitlich versehentlich geschlossen wurde.

### BEZUGSZEICHENLISTE

| **Fig. 1** | |
|---|---|
| Schloss-System | 2* |
| System-Steuerung | 4* |
| Schloss | 6* |
| Datenbank für System-Steuerung | 8* |
| Schloss-Steuerung | 10* |
| B enutzer- S chnittstell e | 12* |
| System-Kommunikationsschnittstelle | 14* |
| Schloss-Kommunikationsschnittstelle | 16* |
| Benutzer | B* |
| Netzwerk | 18* |
| Benutzer-Kennung | USER-ID* |
| Benutzer-Code | USER-PIN* |
| Schloss-Kennung | LOCK-ID* |
| Schloss-Schlüssel | LOCK-PIN* |
| Speicher (Schloss) | 20* |
| Anfrage von Benutzer | REQ* |
| Entriegelungs-Code | OTC* |
| elektronische Nachricht | EN* |
| schriftliche Nachricht | SN* |

| **Fig. 3** | |
|---|---|
| Schloss-System | 2 |
| System-Steuerung | 4 |
| Schloss | 6 |
| Datenbank für System-Steuerung | 8 |
| Schloss-Steuerung | 10 |
| Benutzer-Schnittstelle | 12 |
| System-Kommunikationsschnittstelle | 14 |
| Benutzer | B |
| Schloss-Kommunikationsschnittstelle | 16 |
| Netzwerk | 18 |
| Benutzer-Kennung | USER-ID |
| Benutzer-Code | USER-PIN |
| Schloss-Kennung | LOCK-ID |
| Schloss-Schlüssel | LOCK-PIN |
| Speicher (Schloss) | 20 |
| Anfrage von Benutzer | REQ |
| Entriegelungs-Code | OTC |

## Patentansprüche

1. Schloss-System (2) umfassend:
- eine System-Steuerung (4) mit einer System-Kommunikationsschnittstelle (14), und
- ein von der System-Steuerung (4) entfernt angeordnetes Schloss (6) mit einer Benutzer-Schnittstelle (12), einer Schloss-Kommunikationsschnittstelle (16) und einer Schloss-Steuerung (10), wobei dem Schloss (6) eine das Schloss (6) identifizierende Schloss-Kennung (Lock-ID) zugeordnet ist,
wobei die Schloss-Steuerung (4) eingerichtet ist, eine einen Benutzer (B) des Schlosses (6) identifizierende und eine über die Benutzer-Schnittstelle (12) eingegebene Benutzer-Kennung (User-ID) und die Schloss-Kennung (Lock-ID) über die Schloss-Kommunikationsschnittstelle (16) zu der System-Steuerung (4) zu übertragen
wobei die System-Steuerung (4) eingerichtet ist:
- anhand der von der Schloss-Steuerung (10) erhaltenen Benutzer-Kennung (User-ID) und der von der Schloss-Steuerung (10) erhaltenen Schloss-Kennung (Lock-ID) zu verifizieren, ob der Benutzer (B) zur Entriegelung des Schlosses (6) autorisiert ist,
- wenn der Benutzer (B) autorisiert ist, auf einen dem Benutzer (B) zugeordneten und in einer Datenbank (8) vorliegenden Benutzer-Code (User-PIN) zuzugreifen,
- einen zeitlich beschränkt gültigen Entriegelungs-Code (OTC) zu erzeugen, der wenigstens eine Angabe über den Gültigkeitszeitraum des Entriegelungs-Codes (OTC), die Schloss-Kennung (Lock-ID) und den Benutzer-Code (User-PIN) aus der Datenbank (8) umfasst,
-- den Entriegelungs-Code (OTC) wenigstens unter Verwendung eines dem Schloss (6) zugeordneten Schloss-Schlüssels (Lock-Key) zu verschlüsseln,
-- den verschlüsselten Entriegelungs-Code (OTC) über die System-Kommunikationsstelle (14) und die Schloss-Kommunikationsschnittstelle (16) an das Schloss (6) zu übertragen,
wobei die Schloss-Steuerung (10) ferner eingerichtet ist,
- den von der System-Steuerung (4) übertragenen verschlüsselten Entriegelungs-Code (OTC), wenigstens unter Verwendung des Schloss-Schlüssels (Lock-Key) zu entschlüsseln,
- zu prüfen, ob die Angabe über den Gültigkeitszeitraum des Entriegelungs-Codes (OTC) angibt, dass der Entriegelungs-Code (OTC) noch gültig ist,
- zu prüfen, ob der aus dem Entriegelungscode (ETC) erhaltene Benutzercode (U-SER_PIN) einem über die Benutzer-Schnittstelle (12) eingegebenen Benutzercode (U-SER_PIN) entspricht;
- das Schloss (6) zu entriegeln, wenn der Entriegelungs-Code (OTC) wenigstens die Schloss-Kennung (Lock-ID) und den eingegebenen Benutzercode (User-PIN) umfasst und der Entriegelungs-Code (OTC) noch gültig ist, und
- das Schloss (6) verriegelt zu halten, wenn der Entriegelungs-Code (OTC) die Schloss-Kennung (Lock-ID) oder den eingegebenen Benutzercode (User-PIN) nicht umfasst oder der Entriegelungs-Code (OTC) nicht mehr gültig ist.

2. System nach Patentanspruch 1, wobei
- die System-Steuerung (4) eingerichtet ist, als zeitlich beschränkt gültigen Entriegelungs-Code (OTC) einen Entriegelungs-Code (OTC) zu erzeugen, der ferner die Benutzer-Kennung (User-ID) umfasst.

3. System nach Patentanspruch 1, wobei die Schloss-Steuerung (10) eingerichtet ist, die jeweiligen Schritte für wenigstens zwei unterschiedliche Benutzer (B) des Schlosses (6) durchzuführen und das Schloss (6) nur freizugeben, wenn die Prüfung des Entriegelungs-Codes (OTC) für jeden der wenigstens zwei Benutzer (B) erfolgreich ist.

4. Verfahren zum Entriegeln eines Schlosses (6) eines Schloss-Systems (2), wobei das Schloss (6) eine Benutzer-Schnittstelle (12), eine Schloss-Kommunikationsschnittstelle (16) und eine Schloss-Steuerung (10) umfasst und das Schloss-System (2) eine von dem Schloss (6) entfernt angeordnete zentrale System-Steuerung (4) umfasst, wobei das Verfahren folgenden Schritte umfasst:
- Eingeben einer einen Benutzer (B) des Schloss-Systems (2) identifizierenden Benutzer-Kennung (USER-ID) und eines dem Benutzer (B) zugeordneten Benutzer-Codes (USER-PIN) über die Benutzer-Schnittstelle (12) in das Schloss (6);
- Übertragen der Benutzer-Kennung (USER-ID) sowie einer das Schloss (6) identifizierenden Schloss-Kennung (Lock-ID) über die Schloss-Kommunikationsschnittstelle (16) von dem Schloss (6) zu der System-Steuerung (4);
- Verifizieren durch die System-Steuerung (4), ob der Benutzer (B) zur Entriegelung des Schlosses (6) autorisiert ist, anhand der Benutzer-Kennung (USER-ID) sowie der Schloss-Kennung (Lock-ID);
- Zugreifen auf einen dem Benutzer (B) zugeordneten und in einer Datenbank (8) vorliegenden Benutzer-Code (USER-PIN), wenn der Benutzer (B) autorisiert wurde;
- Erzeugen eines zeitlich beschränkt gültigen Entriegelungs-Codes (OTC), der wenigstens eine Angabe über den Gültigkeitszeitraum des Entriegelungs-Codes (OTC), die Schloss-Kennung (Lock-ID) und den von der System-Steuerung (4) aus der Datenbank (8) erhaltenen Benutzer-Code (USER-PIN) umfasst, durch die System-Steuerung (4);
- Verschlüsseln des Entriegelungs-Codes (OTC) wenigstens unter Verwendung eines dem Schloss (6) zugeordneten Schloss-Schlüssels (Lock-Key) durch die System-Steuerung (4);
- Übertragen des verschlüsselten Entriegelungs-Codes (OTC) von der zentralen System-Steuerung (4) über eine System-Kommunikationsschnittstelle (14) und eine Schloss-Kommunikationsschnittstelle (16) an das Schloss (6);
- Entschlüsseln des übertragenen verschlüsselten Entriegelungs-Codes (OTC) durch die Schloss-Steuerung (10) wenigstens unter Verwendung des Schloss-Schlüssels (LOCK-KEY);
- Prüfen durch die Schloss-Steuerung (10), ob die Angabe über den Gültigkeitszeitraum angibt, dass der Entriegelungs-Code (OTC) noch gültig ist;
- Prüfen durch die Schloss-Steuerung (10), ob der aus dem Entriegelungscode (OTC) erhaltene Benutzercode (USER_PIN); dem eingegebenen Benutzercode (USER-PIN) entspricht;
- Entriegelung des Schlosses (6) durch die Schloss-Steuerung (10), wenn der Entriegelungs-Code (OTC) wenigstens die Schloss-Kennung (Lock-ID) und den eingegebenen Benutzercode (USER-PIN) umfasst und der Entriegelungs-Code (OTC) noch gültig ist; und
- Beibehalten des verriegelten Zustandes des Schlosses (6) durch die Schloss-Steuerung (10), wenn der Entriegelungs-Code (OTC) die Schloss-Kennung (Lock-ID) oder den eingegebenen Benutzercode (User-PIN) nicht umfasst oder der Entriegelungs-Code (OTC) nicht mehr gültig ist.

5. Verfahren nach Patentanspruch 4, wobei
- als zeitlich beschränkt gültiger Entriegelungs-Code (OTC) ein Entriegelungs-Code (OTC) erzeugt wird, der ferner die Benutzer-Kennung (User-ID) umfasst.

6. Verfahren nach Patentanspruch 4, wobei die jeweiligen Schritte für wenigstens zwei unterschiedliche Benutzer (B) des Schlosses (6) durchgeführt werden und das Schloss (6) nur freigegeben wird, wenn die Prüfung des Entriegelungs-Codes (OTC) für jeden der wenigstens zwei Benutzer (B) erfolgreich ist.

## Claims

1. A lock system (2) comprising:
- a system controller (4) having a system communication interface (14), and
- a lock (6) being located remote from the system controller (4) and comprising a user interface (12), a lock communication interface (16) and a lock controller (10), wherein a lock identification (Lock ID) identifying the lock (6) is assigned to the lock (6),
wherein the lock controller (4) is configured to transmit, via the lock communication interface (16), a user identification (User-ID) identifying a user (B) of the lock (6) and inputted via the user interface (12), and the lock identification (Lock-ID) to the system controller (4),
wherein the system controller (4) is configured to:
- verify, based on the user identification (User-ID) received from the lock controller (10) and the lock identification (Lock-ID) received from the lock controller (10), whether the user (B) is authorised to unlock the lock (6),
- in a case the user (B) is authorised to access a user code (user PIN) assigned to the user (B) and present in a database (8),
- generate a temporarily valid unlocking code (OTC) comprising at least an indication of the validity period of the unlocking code (OTC), the lock identification (Lock-ID) and the user code (User-PIN) from the database (8),
- encrypt the unlocking code (OTC) at least using a lock key (Lock-Key) assigned to the lock (6),
- transmit the encrypted unlocking code (OTC) to the lock (6) via the system communication interface (14) and the lock communication interface (16),
wherein the lock controller (10) is further configured to
- decrypt, by using at least the lock key (Lock-Key), the encrypted unlocking code (OTC) transmitted via the system controller (4),
- check whether the indication of the validity period of the unlocking code (OTC) indicates that the unlocking code (OTC) is still valid,
- check whether the user code (USER_PIN) obtained from the unlocking code (ETC) corresponds to a user code (USER_PIN) inputted via the user interface (12);
- unlock the lock (6) in a case the unlocking code (OTC) comprises at least the lock identification (Lock-ID) and the inputted user code (User-PIN) and the unlocking code (OTC) is still valid, and
- keep the lock (6) locked in a case the unlocking code (OTC) does not comprise the lock identification (Lock-ID) or the inputted user code (User-PIN) or the unlocking code (OTC) is no longer valid.

2. The system according to claim 1, wherein
- the system controller (4) is configured to generate, as temporarily valid unlocking code (OTC), an unlocking code (OTC), which further comprises the user identification (user ID).

3. The system according to claim 1, wherein the lock controller (10) is configured to perform the respective steps for at least two different users (B) of the lock (6) and to unlock the lock (6) only in a case the check of the unlocking code (OTC) is successful for each of the at least two users (B).

4. A method for unlocking a lock (6) of a lock system (2), wherein the lock (6) comprises a user interface (12), a lock communication interface (16) and a lock controller (10) and the lock system (2) comprises a central system controller (4) located remote from the lock (6), wherein the method comprises the following steps:
- inputting, into the lock (6) via the user interface (12), a user identification (USER ID) identifying a user (B) of the lock system (2) and a user code (USER PIN) assigned to the user (B);
- transmitting, via the lock communication interface (16) from the lock (6) to the system controller (4), the user identification (USER-ID) and a lock identification (Lock-ID) identifying the lock (6);
- verifying by the system controller (4) whether the user (B) is authorised to unlock the lock (6) based on the user identification (USER-ID) and the lock identification (Lock-ID);
- accessing, in a case the user (B) has been authorised, a user code (USER PIN) assigned to the user (B) and stored in a database (8);
- generating, by the system controller (4), a temporarily valid unlocking code (OTC) comprising at least an indication of the validity period of the unlocking code (OTC), the lock identification (Lock-ID) and the user code (USER-PIN) received by the system controller (4) from the database (8);
- encrypting, by the system controller (4), the unlocking code (OTC) by using at least a lock key assigned to the lock (6);
- transmitting, from the central system controller (4) to the lock (6) via a system communication interface (14) and the lock communication interface (16), the encrypted unlocking code (OTC);
- decrypting the transmitted encrypted unlocking code (OTC) by the lock controller (10) by using at least the lock key;
- checking, by the lock controller (10), whether the indication of the validity period indicates that the unlocking code (OTC) is still valid;
- checking, by the lock controller (10), whether the user code (USER_PIN) obtained from the unlocking code (OTC) corresponds to the inputted user code (USER-PIN);
- unlocking, by the lock controller (10), the lock (6) in a case the unlocking code (OTC) comprises at least the lock identification (Lock-ID) and the inputted user code (USER-PIN) and the unlocking code (OTC) is still valid; and
- maintaining, by the lock controller (10), the locked state of the lock (6) in a case the unlocking code (OTC) does not comprise the lock identification (Lock-ID) or the inputted user code (USER-PIN) or the unlocking code (OTC) is no longer valid.

5. The method according to claim 4, wherein
- an unlocking code (OTC) is generated as the temporarily valid unlocking code (OTC), which unlocking code further comprises the user identification (user ID).

6. The method according to claim 4, wherein the respective steps are carried out for at least two different users (B) of the lock (6) and the lock (6) is unlocked only in the case the check of the unlocking code (OTC) is successful for each of the at least two users (B).

## Revendications

1. Système (2) de serrure comprenant :
- une commande de système (4) avec une interface de communication (14) de système, et
- une serrure (6) disposée à distance de la commande de système (4) avec une interface d'utilisateur (12), une interface de communication (16) de serrure et une commande de serrure (10), un identifiant de serrure (Lock-ID) identifiant la serrure (6) étant associé à la serrure (6),
dans lequel la commande de serrure (10) est conçue pour transmettre à la commande de système (4), via l'interface de communication (16) de serrure, un identifiant d'utilisateur (User-ID) identifiant un utilisateur (B) de la serrure (6) et entré via l'interface d'utilisateur (12) ainsi que l'identifiant de serrure (Lock-ID),
dans lequel le système de commande (4) est conçu pour :
- vérifier, à l'aide de l'identifiant d'utilisateur (User-ID) reçu de la commande de serrure (10) et de l'identifiant de serrure (Lock-ID) reçu de la commande de serrure (10), si l'utilisateur (B) est autorisé à déverrouiller la serrure (6),
- si l'utilisateur (B) est autorisé, accéder à un code d'utilisateur (User-PIN) associé à l'utilisateur (B) et présent dans une base de données (8),
- générer un code de déverrouillage (OTC) à validité limitée dans le temps, qui comprend au moins une indication sur la période de validité du code de déverrouillage (OTC), l'identifiant de serrure (Lock-ID) et le code d'utilisateur (User-PIN) provenant de la base de données (8),
- crypter le code de déverrouillage (OTC) au moins en utilisant une clé de serrure (Lock-Key) associée à la serrure (6),
- transmettre le code de déverrouillage crypté (OTC) à la serrure (6) via l'interface de communication (14) de système et l'interface de communication (16) de serrure,
dans lequel la commande de serrure (10) est en outre conçue pour :
- décrypter le code de déverrouillage crypté (OTC) transmis par la commande de système (4) au moins en utilisant la clé de serrure (Lock-Key),
- vérifier si l'indication sur la période de validité du code de déverrouillage (OTC) indique que le code de déverrouillage (OTC) est encore valide,
- vérifier si le code d'utilisateur (USER_PIN) obtenu à partir du code de déverrouillage (ETC) correspond à un code d'utilisateur (USER_PIN) entré via l'interface d'utilisateur (12) ;
- déverrouiller la serrure (6) lorsque le code de déverrouillage (OTC) comprend au moins l'identifiant de serrure (Lock-ID) et le code d'utilisateur (User-PIN) entré et que le code de déverrouillage (OTC) est encore valide, et
- maintenir la serrure (6) verrouillée lorsque le code de déverrouillage (OTC) ne comprend pas l'identifiant de serrure (Lock-ID) ou le code d'utilisateur (User-PIN) entré ou que le code de déverrouillage (OTC) n'est plus valide.

2. Système selon la revendication 1, dans lequel
la commande de système (4) est conçue pour générer, en tant que code de déverrouillage (OTC) à validité limitée dans le temps, un code de déverrouillage (OTC) qui comprend en outre l'identifiant d'utilisateur (User-ID).

3. Système selon la revendication 1, dans lequel
la commande de serrure (10) est conçue pour exécuter les étapes respectives pour au moins deux utilisateurs (B) différents de la serrure (6) et pour ne libérer la serrure (6) que si la vérification du code de déverrouillage (OTC) est couronnée de succès pour chacun desdits au moins deux utilisateurs (B).

4. Procédé de déverrouillage (6) d'une serrure d'un système (2) de serrure, dans lequel la serrure (6) comprend une interface d'utilisateur (12), une interface de communication (16) de serrure et une commande de serrure (10), et dans lequel le système de serrure (2) comprend une commande de système centrale (4) disposée à distance de la serrure (6), le procédé comprenant les étapes consistant à :
- entrer dans la serrure (6), via l'interface d'utilisateur (12), un identifiant d'utilisateur (USER-ID) identifiant un utilisateur (B) du système (2) de serrure et un code d'utilisateur (USER-PIN) associé à l'utilisateur (B) ;
- transmettre depuis la serrure (6) à la commande de système (4) l'identifiant d'utilisateur (USER-ID) ainsi qu'un identifiant de serrure (Lock-ID) identifiant la serrure (6) via l'interface de communication (16) de serrure ;
- vérifier par la commande de système (4) si l'utilisateur (B) est autorisé à déverrouiller la serrure (6) à l'aide de l'identifiant d'utilisateur (USER-ID) ainsi que de l'identifiant de serrure (Lock-ID) ;
- accéder à un code d'utilisateur (USER-PIN) associé à l'utilisateur (B) et présent dans une base de données (8) lorsque l'utilisateur (B) a été autorisé ;
- générer par la commande de système (4) un code de déverrouillage (OTC) à validité limitée dans le temps qui comprend au moins une indication sur la période de validité du code de déverrouillage (OTC), l'identifiant de serrure (Lock-ID) et le code d'utilisateur (USER-PIN) obtenu par la commande de système (4) à partir de la base de données (8) ;
- crypter le code de déverrouillage (OTC) au moins en utilisant une clé de serrure (Lock-Key) associée à la serrure (6) par la commande de système (4) ;
- transmettre le code de déverrouillage crypté (OTC) de la commande de système centrale (4) à la serrure (6) via une interface de communication (14) de système et l'interface de communication (16) de serrure ;
- décrypter le code de déverrouillage crypté (OTC) transmis par la commande de serrure (10) au moins en utilisant la clé de la serrure (LOCK-KEY) ;
- vérifier, par la commande de serrure (10), si l'indication sur période de validité indique que le code de déverrouillage (OTC) est encore valide ;
- vérifier, par la commande de serrure (10), si le code d'utilisateur (USER_PIN) obtenu à partir du code de déverrouillage (OTC) correspond au code d'utilisateur (USER-PIN) entré ;
- déverrouiller la serrure (6) par la commande de serrure (10) lorsque le code de déverrouillage (OTC) comprend au moins l'identifiant de serrure (Lock-ID) et le code d'utilisateur (USER-PIN) entré et que le code de déverrouillage (OTC) est encore valide ; et
- maintenir l'état verrouillé de la serrure (6) par la commande de serrure (10) lorsque le code de déverrouillage (OTC) ne comprend pas l'identifiant de serrure (Lock-ID) ou le code d'utilisateur (User-PIN) entré ou que le code de déverrouillage (OTC) n'est plus valide.

5. Procédé selon la revendication 4, dans lequel
un code de déverrouillage (OTC), qui comprend en outre l'identifiant d'utilisateur (User-ID), est généré en tant que code de déverrouillage (OTC) à validité limitée dans le temps.

6. Procédé selon la revendication 4, dans lequel les étapes respectives sont exécutées pour au moins deux utilisateurs (B) différents de la serrure (6) et la serrure (6) n'est libérée que si la vérification du code de déverrouillage (OTC) est couronnée de succès pour chacun desdits au moins deux utilisateurs (B).
